# EUROPÄISCHE PATENTSCHRIFT

(11) **EP 3 921 905 B1**
(45) Veröffentlichungstag und Bekanntmachung des Hinweises auf die Patenterteilung: **11.11.2026**
(21) Anmeldenummer: 19827603.2
(22) Anmeldetag: 09.12.2019
(51) Int. Cl.: H02B 1/30, H02B 1/01

(54) **SCHALTSCHRANK MIT EINEM RAHMENGESTELL UND EINEM DARAN FESTGELEGTEN SEITENWANDELEMENT**
SWITCHGEAR CABINET HAVING A FRAME AND A SIDE WALL ELEMENT FASTENED TO THE FRAME
ARMOIRE DE DISTRIBUTION POURVUE D'UN CHÂSSIS ET D'UN ÉLÉMENT DE PAROI LATÉRALE FIXÉ SUR CELUI-CI

(30) Priorität: 07.02.2019 DE 102019103075
(43) Veröffentlichungstag der Anmeldung: 15.12.2021
(73) Patentinhaber: Rittal GmbH & Co. KG, 35745 Herborn (DE)
(72) Erfinder: ZAPLETAL, Rebecca, 57074 Siegen (DE); BÄUMER, Carsten, 57258 Freudenberg (DE)
(74) Vertreter: Angerhausen, Christoph
(86) Internationale Anmeldenummer: PCT/DE2019/101059
(87) Internationale Veröffentlichungsnummer: WO 2020/160716

(56) Entgegenhaltungen:
- EP-A1- 3 159 466
- EP-A2- 2 518 242
- DE-A1- 102014 101 404
- DE-C1- 10 058 260
- US-A1- 2001 049 950
- US-A1- 2009 236 957
- US-A1- 2017 042 057

## Beschreibung

Die Erfindung geht aus von einem Schaltschrank, beispielsweise einem IT-Schrank, einem IT-Rack, einem 19"-Schaltschrank oder dergleichen, mit einem Rahmengestell und mindestens einem über mindestens einen Fallenverschluss an dem Rahmengestell montierte Schaltschranktür, wobei der Fallenverschluss eine Sperrklinke und eine Sperrklinkenaufnahme aufweist. Ein derartiger Schaltschrank ist aus der DE 100 58 260 C1 bekannt. Ähnliche Schaltschränke zeigen auch die US 2009236957 A1, US 2017042057 A1 und die DE 10 2014 101404 A1 Beispiele bekannter Verrigelungsvorrichtungen sind in US 2001049950 A1, EP 3159466 A1 und EP 2518242 A2 dargestellt.

Bei den aus dem Stand der Technik bekannten Schaltschränken werden die Seitenwandelemente mit dem Rahmengestell verschraubt oder von außen zugänglich mit einem einfachen Verschluss mit Schlüsselschloss verriegelt. Dadurch ist jedoch kein durchgängiger Zugangsschutz zum Innenraum des Schaltschranks gegeben, obwohl beispielsweise IT-Schränke häufig mit Front- und Rücktüren versehen sind, die üblicherweise mit Sicherheitsprofilzylindern ausgerüstet sind, wohingegen der Verschluss der Seitenwand eine solche Sicherheitsstufe aufgrund seiner Bauart nicht erreicht. Schrauben sind mit handelsüblichem Werkzeug zu lösen und die in diesem Bereich verwendeten Schlüsselschlösser haben nur eine simple Kodierung beziehungsweise eine millionenfach erhältliche Standardkodierung.

Es ist daher die Aufgabe der Erfindung, den eingangs beschriebenen Schaltschrank derart weiterzuentwickeln, dass er einen erhöhten Zugangsschutz insbesondere über die Seitenwände des Schaltschranks aufweist.

Diese Aufgabe wird durch einen Schaltschrank mit den Merkmalen des Anspruchs 1 gelöst. Die abhängigen Ansprüche betreffen jeweils vorteilhafte Ausführungsformen der Erfindung.

Demgemäß ist vorgesehen, dass die Sperrklinke einen Klinkenvorsprung aufweist, der über eine Federvorspannung in eine Verriegelungsposition, in welcher der Klinkenvorsprung um eine maximale Länge aus einem Gehäuse der Sperrklinke herausragt, vorgespannt ist..

Durch die Verwendung des Fallenverschlusses kann erreicht werden, dass die Befestigung der Seitenwandelemente an dem Rahmengestell ohne die Verwendung von Befestigungsmitteln oder dergleichen möglich ist, die von der Außenseite des Schaltschranks her erreichbar sind. Dadurch kann die Befestigung des Seitenwandelements weiterhin werkzeuglos erfolgen. Beispielsweise kann die Sperrklinkenaufnahme an einer dem Schaltschrankinnenraum zugewandten Innenseite im Randbereich des Seitenwandelements montiert sein. Dazu kann das Seitenwandelement beispielsweise an der Innenseite aufgeschweißte Gewindebolzen aufweisen.

Der erfindungsgemäße Schaltschrank ermöglicht die Realisierung von Ausführungsformen, welche für die Befestigung der Seitenwandelemente an dem Rahmengestell keine Nachbearbeitung des Seitenwandelements voraussetzen. Insbesondere ist es nicht erforderlich, Durchbrüche in das Seitenwandelement einzubringen, beispielsweise für die Montage von Schlüsselschlössern oder dergleichen.

Der Fallenverschluss kann insbesondere vollständig im Inneren des Schaltschranks und damit von außerhalb des Schaltschranks bei verschlossenem Schaltschrank unzugänglich angeordnet ist. Für die Wiederauslösung des Fallenverschlusses, das heißt für die Trennung von Sperrklinke und Sperrklinkenaufnahme, kann eine von Sperrklinke und Sperrklinkenaufnahme ein manuelles Betätigungselement aufweisen, mit Hilfe welcher der Klinkenvorsprung der Sperrklinke aus der Sperrklinkenaufnahme herausgezogen wird. Das Bestätigungselement kann an einer dem Schaltschrankinnenraum zugewandten Seite der Sperrklinke angeordnet und damit im Innern des Schaltschranks leicht zu erreichen sein.

Die Profilumkantung kann zwei über eine Umkantung, vorzugsweise eine 90°-Umkantung, ineinander übergehende Profilseiten aufweisen, von denen eine erste Profilseite ein Dichtsteg ist, der in einer in der Außenseite liegenden Dichtebene des Rahmengestells endet.

Die Sperrklinkenaufnahme kann an der Profilumkantung, insbesondere an der ersten Profilseite, etwa dem Dichtsteg, anliegen, so dass eine zusätzliche Stabilisierung und Arretierung des Seitenwandelements in Bezug auf das Rahmengestell erreicht wird. Wenn die Sperrklinkenaufnahme in einem Eckbereich des Rahmengestells, in dem zwei senkrecht zueinander stehende Profilstreben des Rahmengestells aufeinander treffen, angeordnet ist, kann die Sperrklinkenaufnahme mit zwei senkrecht zueinander verlaufenden äußeren Anlageflächen an den beiden ersten Profilseiten beider Profilstreben anliegen, so dass insoweit bereits eine Arretierung des Seitenwandelements in der Ebene des Seitenwandelements erreicht wird.

Von den beiden Profilseiten kann eine zweite Profilseite eine dem Seitenwandelement zugewandte Montageebene mit Befestigungsaufnahmen aufweisen, die gegenüber der Dichtebene zurückversetzt und vorzugsweise von dieser um eine Abmessung des Volumens parallel beabstandet ist.

Das Volumen kann beispielsweise durch denjenigen Bereich gebildet sein, welcher zwischen der Montageebene und der Dichtebene angeordnet ist, soweit dieser durch die Profilumkantung einerseits und das Seitenwandelement andererseits begrenzt ist. Der Fallenverschluss, insbesondere die Sperrklinke und/oder die Sperrklinkenaufnahme des Fallenverschlusses, müssen nicht zwangsläufig vollständig innerhalb des Volumens angeordnet sein.

Die Sperrklinke weist ein Gehäuse auf, über das sie an dem Rahmengestell festgelegt ist. Die Sperrklinkenaufnahme kann mindestens eine durchgehende Durchgangsbohrung aufweisen, über die sie an dem Seitenwandelement verschraubt ist.

Das Gehäuse kann an einer von dem Seitenwandelement abgewandten Seiten ein Betätigungselement aufweisen, über das ein gegenüber dem Gehäuse verstellbarer Klinkenvorsprung von einer Verriegelungsposition, in der der Klinkenvorsprung in die Sperrklinkenaufnahme hineinragt, in eine Freigabeposition verstellbar ist, in der der Klinkenvorsprung der Sperrklinkenaufnahme vorgelagert ist.

Das Gehäuse kann eine zu einer ersten Gehäuseaußenseite offene Klinkenführung für einen gegenüber dem Gehäuse verstellbaren Klinkenvorsprung der Sperrklinke aufweisen. Die Klinkenführung kann in dem Volumen angeordnet sein und eine Linearführung für den Klinkenvorsprung aufweisen. Die Klinkenführung kann als die Linearführung ausgebildet sein. Die Klinkenführung kann als eine Ausnehmung des Gehäuses ausgebildet sein, die zu der ersten Gehäuseaußenseite offen und mit ihrer Öffnung der Sperrklinkenaufnahme zugewandt ist.

Es kann weiterhin vorgesehen sein, dass entlang der Klinkenführung ein Klinkenvorsprung parallel zu dem Seitenwandelement und/oder der Profilumkantung zwischen einer Verriegelungsposition, in der der Klinkenvorsprung in der Sperrklinkenaufnahme aufgenommen ist und einer Freigabeposition, in der der Klinkenvorsprung der Sperrklinkenaufnahme vorgelagert ist, verstellbar ist.

Das Gehäuse kann eine sich zwischen der ersten und einer gegenüberliegenden zweiten Außenseite des Gehäuses durchgängig erstreckende und zu diesen Seiten offene Nut aufweisen, deren offene Längsseite in einer weiteren Seite des Gehäuses angeordnet ist, die die gegenüberliegenden Außenseiten des Gehäuses miteinander verbindet.

Die Nut des Gehäuses kann einen rechteckigen Profilabschnitt des Rahmengestells umgreifen und eine Formschlussaufnahme für die formschlüssige Aufnahme des Rahmengestells bilden, wobei in der Formschlussaufnahme Rastmittel angeordnet sind, die in Befestigungsaufnahmen des rechteckigen Profilabschnitts verrastet sind.

Das Gehäuse kann einen Schraubkanal aufweisen, der mit einer Befestigungsaufnahme der Profilumkantung fluchtet, wenn das Gehäuse über die Formschlussaufnahme auf dem Rahmengestell aufgesetzt und über das Rastmittel an dem Rahmengestell verrastet ist.

Das Gehäuse kann einen Gehäuseabschnitt mit einem durchgehenden Schraubkanal aufweisen, der über seine gegenüberliegenden Öffnungen einerseits zu der Außenseite des Rahmengestells und andererseits zu einer Montageebene der Profilumkantung, die Befestigungsaufnahme aufweist, geöffnet ist.

Der Schraubkanal kann sich, gegebenenfalls ausschließlich, durch das Volumen erstrecken und eine Befestigungsschraube kann von der Außenseite in den Schraubkanal eingesetzt und in eine der Befestigungsaufnahme eingeschraubt sein, so dass ein Schraubenkopf der Befestigungsschraube dem Seitenwandelement zugewandt und damit von dem Seitenwandelement verdeckt ist.

Weitere Einzelheiten der Erfindung werden anhand der nachstehenden Figuren erläutert.

Dabei zeigt:
- Figur 1: eine Detailansicht einer beispielhaften Ausführungsform eines Schaltschranks gemäß der vorliegenden Erfindung;
- Figur 2: eine Detailansicht einer weiteren Ausführungsform eines erfindungsgemäßen Schaltschranks mit von der Sperrklinkenaufnahme getrennter Sperrklinke;
- Figur 3: einen Horizontalquerschnitt durch eine vertikale Profilstrebe des Schaltschranks gemäß einer dritten Ausführungsform;
- Figur 4: in perspektivischer Darstellung eine Detailansicht einer an einer vertikalen Profilstrebe montierten Sperrklinke gemäß einer weiteren Ausführungsform der Erfindung; und
- Figur 5: in perspektivischer Darstellung eine weitere Detailansicht der Ausführungsform gemäß Figur 4 mit angeschnittener Profilstrebe und Blick auf die Innenseite des Seitenwandelements.

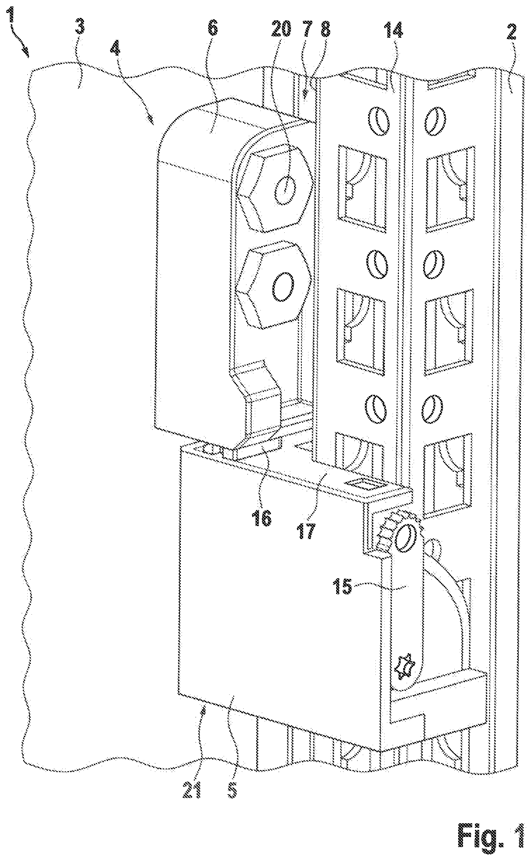

In Figur 1 ist eine erste beispielhafte Ausführungsform eines erfindungsgemäßen Schaltschranks 1 gezeigt. Der Schaltschrank 1 besteht im Wesentlichen aus einem Schaltschrankrahmengestell 2 mit vier vertikalen und acht horizontalen Profilstreben. An einer Außenseite des Rahmengestells 2 ist ein Seitenwandelement 3 montiert. Für die Realisierung der Erfindung geeignete Rahmengestelle mit daran festgelegte Seitenwandelementen sind auch in der DE 10 2014 101 404 A1 beschrieben. Zwischen einem rechteckigen Profilabschnitt 14 einer Vertikalstrebe des Rahmengestells 2 und der Innenseite des Seitenwandelements 3 ist ein freies Volumen 7 ausgebildet, welches bei demontiertem Seitenwandelement von der Außenseite des Rahmengestells 2 zugänglich und erfindungsgemäß dazu verwendet wird, einen Fallenverschluss 4 für die von außen unzugängliche Befestigung des Seitenwandelements 3 an der Außenseite des Rahmengestells 2 zu realisieren. Der Fallenverschluss 4 besteht im Wesentlichen aus einer Sperrklinke 5 und einer Sperrklinkenaufnahme 6. Die Sperrklinke 5 wiederum weist einen Klinkenvorsprung 16 auf, der in seiner Längsrichtung, die vorliegend der

Vertikalrichtung entspricht, verstellbar und über eine mechanische Vorspannung, beispielsweise eine Federvorspannung in die in Figur 1 gezeigte Verriegelungsposition vorgespannt ist, in welcher der Klinkenvorsprung 16 von unten in die über der Sperrklinke 5 angeordnete Sperrklinkenaufnahme 6 hineinragt.

Während die Sperrklinke 5 den rechteckigen Profilabschnitt 14 umgreift und über eine nicht dargestellte Schraubverbindung mit dem Rahmengestell, insbesondere dem rechteckigen Profilabschnitt 14 fest verschraubt ist, weist die Sperrklinkenaufnahme 6 zwei Bolzenverbindungen zu dem Seitenwandelement 3 auf, die mit Hilfe von zwei an der Innenseite des Seitenwandelements 3 aufgeschweißten Aufschweißbolzen 20 realisiert sind. Wenn somit der Klinkenvorsprung 16 in der Sperrklinkenaufnahme 6 vorzugsweise formschlüssig aufgenommen ist, ist das Seitenwandelement 3 zumindest in der Richtung senkrecht zur Ebene des Seitenwandelements 3 an dem Rahmengestell 2 fixiert.

Die Sperrklinke 5 weist ein Betätigungselement 15 auf, über welches der Klinkenvorsprung 16 von der Figur 1 dargestellten Verriegelungsposition, in der der Klinkenvorsprung 16 in die Sperrklinkenaufnahme 6 hineinragt, in eine Freigabeposition verstellt werden kann, in welcher der Klinkenvorsprung 16 der Sperrklinkenaufnahme 6 vorgelagert ist.

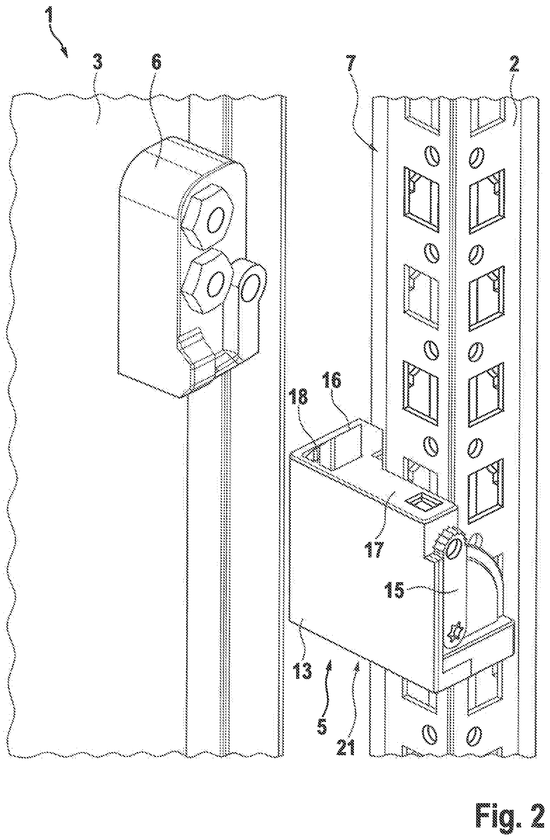

Die Figur 2 zeigt eine Ausführungsform eines erfindungsgemäßen Schaltschranks 1, bei dem das Seitenwandelement 3 mit der daran über seine Innenseite befestigten Sperrklinkenaufnahme 6 von dem Rahmengestell 2 getrennt worden ist, beziehungsweise vor der Montage des Seitenwandelements 3 an dem Rahmengestell 2. Aufgrund seiner mechanischen Vorspannung ist in diesem Zustand der Klinkenvorsprung 16 um seine maximale Länge aus dem Gehäuse 13 der Sperrklinke 5 ausgefahren. Der Klinkenvorsprung 16 weist an seiner der Innenseite der Seitenwand 3 zugewandten Seite eine Anlaufschräge auf.

Das Gehäuse 13 weist eine obere Gehäuseaußenseite 17 auf, zu der eine Klinkenführung 18 geöffnet ist. In der Klinkenführung 18 ist der Klinkenvorsprung 16 in Vertikalrichtung gegenüber dem Gehäuse 13 verstellbar aufgenommen. Die Klinkenführung 18 ist als eine Ausnehmung des Gehäuses 13 ausgebildet, die zu der ersten Gehäuseseite 17 offen und mit ihrer Öffnung der Sperrklinkenaufnahme 6 zugewandt ist, wenn die Sperrklinkenaufnahme 6 in der in Figur 1 dargestellten Weise dem Rahmengestell 2 und damit der Sperrklinke 5 angenähert worden ist.

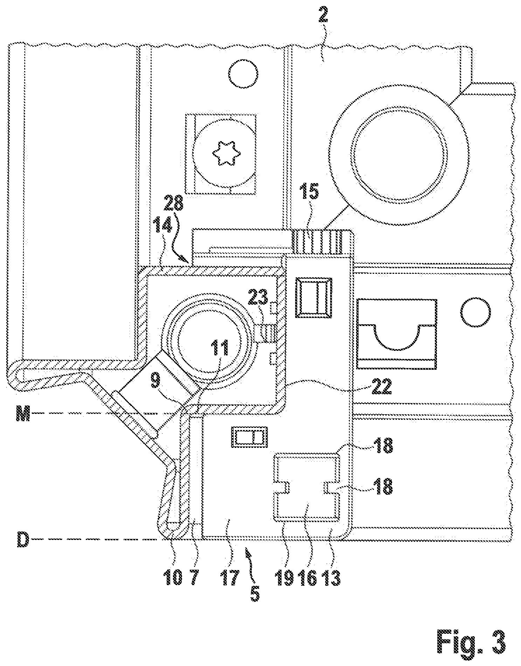

Die Ausführungsform gemäß Figur 3 zeigt wiederum ein Rahmengestell 2, bei dem eine Vertikalstrebe des Rahmengestells 2 im Horizontalquerschnitt gezeigt ist. Die Vertikalstrebe weist einen rechteckigen Profilabschnitt 14 auf, der von dem Gehäuse 13 der Sperrklinke 5 umgriffen wird. Die Sperrklinke 5 ist teilweise in einem Volumen 7 aufgenommen, welches zwischen einer Profilumkantung 8 des Rahmengestells 2 und einem über die Dichtebene D montierbaren Seitenwandelement (nicht dargestellt) abgegrenzt ist. Die Profilumkantung 8 weist zwei über eine Umkantung 9, vorliegend eine 90°-Umkantung, ineinander übergehende Profilseiten 10, 11 auf, von denen eine erste Profilseite 10 der Dichtsteg ist, der in einer in der Außenseite liegenden Dichtebene D des Rahmengestells 2 endet. Die zweite Profilseite 11 weist eine dem Seitenwandelement 3 zugewandte Montageebene M mit Befestigungsaufnahmen 12 auf, die gegenüber der Dichtebene D in Richtung Schaltschrankinnenraum zurückversetzt und von der Dichtebene D um eine Abmessung des Volumens senkrecht zur Ebene des Seitenwandelements 3 (vergleiche Figuren 1 und 2) parallel beabstandet ist.

Ein Betätigungselement 15 zur Entriegelung des Klinkenvorsprungs 16 aus der Klinkenaufnahme 6 ist an einer von der Dichtebene D abgewandten Außenseite der Sperrklinke 5 angeordnet, so dass das als Betätigungshebel ausgebildete Betätigungselement 15 komfortabel vom Inneren des Schaltschranks 1 her zu erreichen ist. Das Gehäuse 13 der Sperrklinke 5 weist eine sich zwischen der ersten Außenseite 17 und der zweiten Außenseite 21 des Gehäuses 13 durchgängig erstreckende und zu diesen sich gegenüber liegenden Seiten 17, 21 offene Nut 22 auf. Eine offene Längsseite 28 der Nut 22 ist in einer weiteren Seiten des Gehäuses 13 angeordnet, die die gegenüberliegenden Außenseite 17, 21 des Gehäuses 13 miteinander verbindet und die der ersten Profilseite 10 zugewandt ist. Die Nut 22 umgreift einen rechteckigen Profilabschnitt 14 des Rahmengestells 2 und bildet eine Formschlussaufnahme für die formschlüssige Aufnahme des Rahmengestells 2, insbesondere des rechteckigen Profilabschnitts 14.

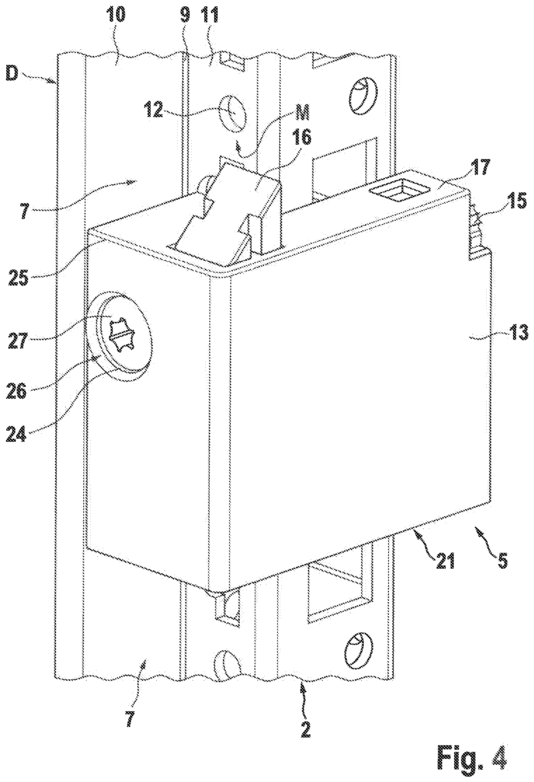

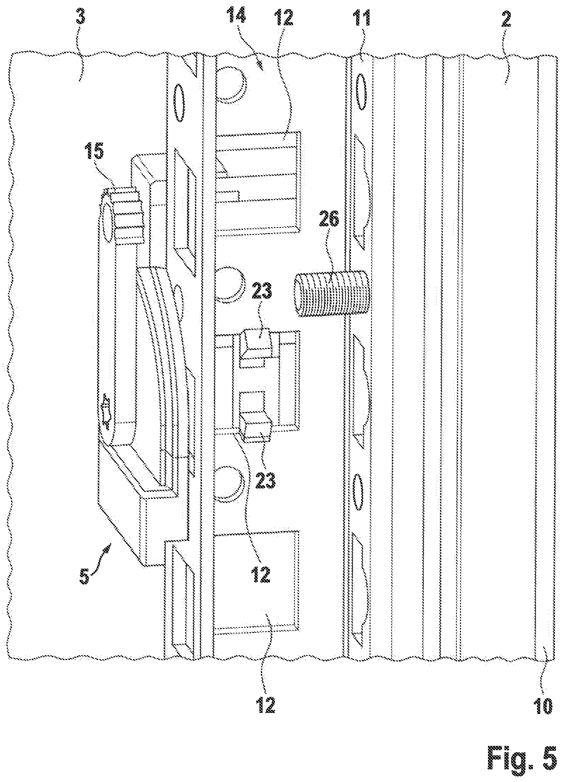

Wie in Figur 5 dargestellt ist, können in der Formschlussaufnahme Rastmittel 23 angeordnet sein, die in Befestigungsaufnahmen 12 des rechteckigen Profiabschnitts 14 verrastet sind. In der Zusammenschau der Figuren 4 und 5 ist weiterhin zu erkennen, dass die Sperrklinke 5, insbesondere das Gehäuse 13 der Sperrklinke 5 einen Gehäuseabschnitt 25 aufweisen kann, der einen durchgehenden Schraubkanal 24 aufweist, der über seine gegenüberliegenden Öffnungen einerseits zu der Außenseite des Rahmengestells 2, mithin zu der Dichtebene D, und andererseits zu der Montageebene M der Profilumkantung 8, insbesondere zu der zweiten Profilseite 11, geöffnet ist. Die weitere Profilseite 11 weist Befestigungsaufnahmen 12 auf, über welche die Sperrklinke 5 mit Hilfe der Schraube 26 an dem Rahmengestell 2 verschraubt werden kann. Der Schraubkanal 24 erstreckt sich durch das Volumen 7 hindurch und die Befestigungsschraube 26 ist von der Außenseite, mithin über die Dichtebene D, in den Schraubkanal 24 eingesetzt und in eine der Befestigungsaufnahmen 12 der zweiten Profilseite 11 eingeschraubt, so dass ein Schraubenkopf 27 der Befestigungsschraube 26 bei montiertem Seitenwandelement von dem Seitenwandelement verdeckt ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein, stets im Rahmen des durch die Ansprüche definierten Schutzumfangs.

### Bezugszeichenliste

- 1: Schaltschrank
- 2: Rahmengestell
- 3: Seitenwandelement
- 4: Fallenverschluss
- 5: Sperrklinke
- 6: Sperrklinkenaufnahme
- 7: Volumen
- 8: Profilumkantung
- 9: Umkantung
- 10: erste Profilseite
- 11: zweite Profilseite
- 12: Befestigungsaufnahme
- 13: Gehäuse
- 14: rechteckiger Profilabschnitt
- 15: Betätigungselement
- 16: Klinkenvorsprung
- 17: Gehäuseaußenseite
- 18: Klinkenführung
- 19: Linearführung
- 20: Bolzen
- 21: Außenseite
- 22: Nut
- 23: Rastmittel
- 24: Schraubkanal
- 25: Gehäuseabschnitt
- 26: Befestigungsschraube
- 27: Schraubenkopf
- 28: Längsseite
- D: Dichtebene
- M: Montageebene

## Patentansprüche

1. Schaltschrank (1) mit einem Rahmengestell (2) und einem über mindestens einen Fallenverschluss (4) an dem Rahmengestell (2) montierten Seitenwandelement (3), wobei der Fallenverschluss (4) eine Sperrklinke (5) und eine Sperrklinkenaufnahme (6) aufweist, wobei die Sperrklinke (5) an dem Rahmengestell (2) festgelegt ist und die Sperrklinkenaufnahme (6) an dem Seitenwandelement (3) festgelegt ist, wobei die Sperrklinke (5) und die Sperrklinkenaufnahme (6) in einem zu einer Außenseite des Rahmengestells (2) offenen Volumen (7) aufgenommen sind, das einerseits von einer Profilumkantung (8) des Rahmengestells (2) und andererseits an die Profilumkantung (8) angrenzend an der Außenseite von dem Seitenwandelement (3) begrenzt ist, wobei ein Gehäuse (13) der Sperrklinke (5), das an dem Rahmengestell (2) festgelegt ist, einen rechteckigen Profilabschnitt (14) des Rahmengestells (2) umgreift, wobei die Sperrklinke einen Klinkenvorsprung (16) aufweist, der über eine Federvorspannung in eine Verriegelungsposition, in welcher der Klinkenvorsprung um eine maximale Länge aus dem Gehäuse (13) der Sperrklinke (5) herausragt, vorgespannt ist.

2. Schaltschrank (1) nach Anspruch 1, bei dem die Profilumkantung (8) zwei über eine Umkantung (9), vorzugsweise eine 90°-Umkantung (9), ineinander übergehende Profilseiten (10, 11) aufweist, von denen eine erste Profilseite (10) ein Dichtsteg ist, der in einer in der Außenseite liegenden Dichtebene (D) des Rahmengestells (2) endet.

3. Schaltschrank (1) nach Anspruch 1 oder 2, bei dem von den beiden Profilseiten (10, 11) eine zweite Profilseite (11) eine dem Seitenwandelement (3) zugewandte Montageebene (M) mit Befestigungsaufnahmen (12) aufweist, die gegenüber der Dichtebene (D) zurückversetzt und vorzugsweise von dieser um eine Abmessung des Volumens (7) parallel beabstandet ist.

4. Schaltschrank (1) nach einem der vorangegangenen Ansprüche, bei dem das Gehäuse (13) an einer von dem Seitenwandelement (3) abgewandten Seite ein Betätigungselement (15) aufweist, über das der gegenüber dem Gehäuse (13) verstellbarer Klinkenvorsprung (16) von der Verriegelungsposition, in der der Klinkenvorsprung (16) in die Sperrklinkenaufnahme (6) hineinragt, in eine Freigabeposition verstellbar ist, in der der Klinkenvorsprung (16) der Sperrklinkenaufnahme (6) vorgelagert ist.

5. Schaltschrank (1) nach einem der vorangegangenen Ansprüche, bei dem das Gehäuse (13) eine zu einer ersten Gehäuseaußenseite (17) offene Klinkenführung (18) für einen gegenüber dem Gehäuse (13) verstellbaren Klinkenvorsprung (16) der Sperrklinke (5) aufweist.

6. Schaltschrank (1) nach Anspruch 5, bei dem die Klinkenführung (18) in dem Volumen (7) angeordnet ist und eine Linearführung (19) für den Klinkenvorsprung (16) aufweist.

7. Schaltschrank (1) nach Anspruch 5 oder 6, bei dem die Klinkenführung (18) als eine Ausnehmung des Gehäuses (13) ausgebildet ist, die zu der ersten Gehäuseaußenseite (17) offen und mit ihrer Öffnung der Sperrklinkenaufnahme (6) zugewandt ist.

8. Schaltschrank (1) nach einem der Ansprüche 6 bis 7, bei dem entlang der Klinkenführung (18) ein Klinkenvorsprung (16) parallel zu dem Seitenwandelement (3) und/oder der Profilumkantung (8) zwischen einer Verriegelungsposition, in der der Klinkenvorsprung (16) in der Sperrklinkenaufnahme (6) aufgenommen ist, und einer Freigabeposition, in der der Klinkenvorsprung (16) der Sperrklinkenaufnahme (6) vorgelagert ist, verstellbar ist.

9. Schaltschrank (1) nach einem der Ansprüche 5 bis 8, bei dem das Gehäuse (13) eine sich zwischen der ersten und einer gegenüberliegenden weiteren Außenseite (17, 21) des Gehäuses (13) durchgängig erstreckende und zu diesen (17, 21) Seiten offene Nut (22) aufweist, deren offene Längsseite (28) in einer weiteren Seite des Gehäuses (13) angeordnet ist, die die gegenüberliegenden Außenseiten (17, 21) des Gehäuses (13) miteinander verbindet.

10. Schaltschrank (1) nach Anspruch 9, bei dem die Nut (22) des Gehäuses (13) einen rechteckigen Profilabschnitt (14) des Rahmengestells (2) umgreift und eine Formschlussaufnahme für die formschlüssige Aufnahme des Rahmengestells (2) bildet, wobei in der Formschlussaufnahme Rastmittel (23) angeordnet sind, die in Befestigungsaufnahmen (12) des rechteckigen Profilabschnitts (14) verrastet sind.

11. Schaltschrank (1) nach Anspruch 10, bei dem das Gehäuse (13) einen Schraubkanal (24) aufweist, der mit einer Befestigungsaufnahme der Profilumkantung (8) fluchtet, wenn das Gehäuse (13) über die Formschlussaufnahme auf dem Rahmengestell (2) aufgesetzt und über das Rastmittel an dem Rahmengestell (2) verrastet ist.

12. Schaltschrank (1) nach einem der vorangegangenen Ansprüche, bei dem das Gehäuse (13) einen Gehäuseabschnitt (25) mit einem durchgehenden Schraubkanal (24) aufweist, der über seine gegenüber liegenden Öffnungen einerseits zu der Außenseite des Rahmengestells (2) und andererseits zu einer Montageebene (M) der Profilumkantung (8), die Befestigungsaufnahmen (12) aufweist, geöffnet ist.

13. Schaltschrank (1) nach Anspruch 12, bei dem sich der Schraubkanal (24) durch das Volumen (7) erstreckt und eine Befestigungsschraube (26) von der Außenseite in den Schraubkanal (24) eingesetzt und in eine der Befestigungsaufnahmen (12) eingeschraubt ist, so dass ein Schraubenkopf (27) der Befestigungsschraube (26) von dem Seitenwandelement (3) verdeckt ist.

## Claims

1. Switchgear cabinet (1) having a frame structure (2) and a side wall element (3) which is mounted on the frame structure (2) via at least one latch closure (4), wherein the latch closure (4) has a pawl (5) and a pawl receptacle (6), wherein the pawl (5) is fixed to the frame structure (2) and the pawl receptacle (6) is fixed to the side wall element (3), wherein the pawl (5) and the pawl receptacle (6) are received in a volume (7) which is open towards an outer side of the frame structure (2) and which is delimited on the one side by a profile edge (8) of the frame structure (2) and on the other side by the side wall element (3) adjacent to the profile edge (8) on the outer side, wherein a housing (13) of the pawl (5) which is fixed to the frame structure (2) engages around a rectangular profile section (14) of the frame structure (2), wherein the pawl has a pawl projection (16) which is pretensioned via a spring pretension into a locking position in which the pawl projection protrudes by a maximum length out of the housing (13) of the pawl (5).

2. Switchgear cabinet (1) according to claim 1, in which the profile edge (8) has two profile sides (10, 11) which merge into one another via an edge (9), preferably a 90° edge (9), of which a first profile side (10) is a sealing web which ends in a sealing plane (D), lying in the outer side, of the frame structure (2).

3. Switchgear cabinet (1) according to claim 1 or 2, in which, of the two profile sides (10, 11), a second profile side (11) has a mounting plane (M), facing the side wall element (3), with fastening receptacles (12) which are set back with respect to the sealing plane (D) and are preferably spaced apart from the latter in parallel by a dimension of the volume (7).

4. Switchgear cabinet (1) according to one of the preceding claims, in which the housing (13) has, on a side facing away from the side wall element (3), an actuating element (15) via which the pawl projection (16), which is adjustable with respect to the housing (13), is adjustable from the locking position, in which the pawl projection (16) projects into the pawl receptacle (6), into a release position, in which the pawl projection (16) is positioned in front of the pawl receptacle (6).

5. Switchgear cabinet (1) according to one of the preceding claims, in which the housing (13) has a pawl guide (18), open towards a first housing outer side (17), for a pawl projection (16), adjustable with respect to the housing (13), of the pawl (5).

6. Switchgear cabinet (1) according to claim 5, in which the pawl guide (18) is arranged in the volume (7) and has a linear guide (19) for the pawl projection (16).

7. Switchgear cabinet (1) according to claim 5 or 6, in which the pawl guide (18) is formed as a recess of the housing (13) which is open towards the first housing outer side (17) and faces with its opening towards the pawl receptacle (6).

8. Switchgear cabinet (1) according to one of claims 6 to 7, in which, along the pawl guide (18), a pawl projection (16) is adjustable parallel to the side wall element (3) and/or the profile edge (8) between a locking position, in which the pawl projection (16) is received in the pawl receptacle (6), and a release position, in which the pawl projection (16) is positioned in front of the pawl receptacle (6).

9. Switchgear cabinet (1) according to one of claims 5 to 8, in which the housing (13) has a groove (22) which extends continuously between the first and an opposite further outer side (17, 21) of the housing (13) and is open towards these (17, 21) sides, the open longitudinal side (28) of which groove is arranged in a further side of the housing (13) which connects the opposite outer sides (17, 21) of the housing (13) to one another.

10. Switchgear cabinet (1) according to claim 9, in which the groove (22) of the housing (13) engages around a rectangular profile section (14) of the frame structure (2) and forms a form-fitting receptacle for the form-fitting reception of the frame structure (2), wherein latching means (23) are arranged in the form-fitting receptacle and are latched into fastening receptacles (12) of the rectangular profile section (14).

11. Switchgear cabinet (1) according to claim 10, in which the housing (13) has a screw channel (24) which is aligned with a fastening receptacle of the profile edge (8) when the housing (13) is placed on the frame structure (2) via the form-fitting receptacle and is latched to the frame structure (2) via the latching means (23).

12. Switchgear cabinet (1) according to one of the preceding claims, in which the housing (13) has a housing section (25) with a continuous screw channel (24) which is open via its opposite openings, on the one hand, to the outer side of the frame structure (2) and, on the other hand, to a mounting plane (M) of the profile edge (8) which has fastening receptacles (12).

13. Switchgear cabinet (1) according to claim 12, in which the screw channel (24) extends through the volume (7) and a fastening screw (26) is inserted into the screw channel (24) from the outer side and is screwed into one of the fastening receptacles (12), so that a screw head (27) of the fastening screw (26) is concealed by the side wall element (3).

## Revendications

1. Armoire électrique (1) comprenant un châssis (2) et un élément de paroi latérale (3) monté sur le châssis (2) par l'intermédiaire d'au moins une fermeture à loquet (4), la fermeture à loquet (4) présentant un cliquet d'arrêt (5) et un logement de cliquet d'arrêt (6), le cliquet d'arrêt (5) étant fixé sur le châssis (2) et le logement de cliquet d'arrêt (6) étant fixé sur l'élément de paroi latérale (3), le cliquet d'arrêt (5) et le logement de cliquet d'arrêt (6) étant reçus dans un volume (7) ouvert vers un côté extérieur du châssis (2), lequel volume est limité d'une part par un bord de profilé (8) du châssis (2) et d'autre part de manière adjacente au bord de profilé (8) sur le côté extérieur par l'élément de paroi latérale (3), un boîtier (13) du cliquet d'arrêt (5), qui est fixé sur le châssis (2), entourant une section de profilé rectangulaire (14) du châssis (2), le cliquet d'arrêt présentant une saillie de cliquet (16) qui est précontrainte dans une position de verrouillage au moyen d'un ressort dans laquelle la saillie de cliquet (16) fait saillie d'une longueur maximale hors du boîtier (13) du cliquet d'arrêt (5).

2. Armoire électrique (1) selon la revendication 1, dans laquelle le bord de profilé (8) présente deux côtés de profilé (10, 11) se prolongeant l'un dans l'autre par l'intermédiaire d'un pli (9), de préférence d'un pli à 90° (9), parmi lesquels un premier côté de profilé (10) est une nervure d'étanchéité qui se termine dans un plan d'étanchéité (D) du châssis (2) situé du côté extérieur.

3. Armoire électrique (1) selon la revendication 1 ou 2, dans laquelle parmi les deux côtés de profilé (10, 11), un deuxième côté de profilé (11) présente un plan de montage (M) tourné vers l'élément de paroi latérale (3) pourvu de logements de fixation (12), lesquels sont en retrait par rapport au plan d'étanchéité (D) et sont de préférence espacés parallèlement de celui-ci d'une distance correspondant à une dimension du volume (7).

4. Armoire électrique (1) selon l'une quelconque des revendications précédentes, dans laquelle le boîtier (13) présente sur un côté opposé à l'élément de paroi latérale (3) un élément d'actionnement (15), par le biais duquel la saillie de cliquet (16) déplaçable par rapport au boîtier (13) peut être déplacée de la position de verrouillage, dans laquelle la saillie de cliquet (16) fait saillie dans le logement de cliquet d'arrêt (6), dans une position de libération, dans laquelle la saillie de cliquet (16) est disposée en avant du logement de cliquet d'arrêt (6).

5. Armoire électrique (1) selon l'une quelconque des revendications précédentes, dans laquelle le boîtier (13) présente un guide de cliquet (18) ouvert vers un premier côté extérieur de boîtier (17) pour une saillie de cliquet (16) du cliquet d'arrêt (5) déplaçable par rapport au boîtier (13).

6. Armoire électrique (1) selon la revendication 5, dans laquelle le guide de cliquet (18) est disposé dans le volume (7) et présente un guide linéaire (19) pour la saillie de cliquet (16).

7. Armoire électrique (1) selon la revendication 5 ou 6, dans laquelle le guide de cliquet (18) est réalisé sous forme d'évidement du boîtier (13), qui est ouvert vers le premier côté extérieur de boîtier (17) et dont l'ouverture est orientée vers le logement de cliquet d'arrêt (6).

8. Armoire électrique (1) selon la revendication 6 ou 7, dans laquelle le long du guide de cliquet (18) une saillie de cliquet (16) peut être déplacée parallèlement à l'élément de paroi latérale (3) et/ou au bord de profilé (8) entre une position de verrouillage, dans laquelle la saillie de cliquet (16) est reçue dans le logement de cliquet d'arrêt (6), et une position de libération, dans laquelle la saillie de cliquet (16) est disposée en avant du logement de cliquet d'arrêt (6).

9. Armoire électrique (1) selon l'une quelconque des revendications 5 à 8, dans laquelle le boîtier (13) présente une rainure (22) s'étendant en continu entre le premier et un autre côté extérieur opposé (17, 21) du boîtier (13) et ouverte vers ces côtés (17, 21), dont le côté longitudinal ouvert (28) est disposé dans un autre côté du boîtier (13), qui relie entre eux les côtés extérieurs opposés (17, 21) du boîtier (13).

10. Armoire électrique (1) selon la revendication 9, dans laquelle la rainure (22) du boîtier (13) entoure une section de profilé rectangulaire (14) du châssis (2) et forme un logement à engagement positif destiné à recevoir le châssis (2) par engagement positif, des moyens d'encliquetage (23) étant disposés dans le logement par engagement par correspondance de formes, lesquels sont encliquetés dans des logements de fixation (12) de la section de profilé rectangulaire (14).

11. Armoire électrique (1) selon la revendication 10, dans laquelle le boîtier (13) présente un canal de vissage (24) qui est aligné avec un logement de fixation du bord de profilé (8) lorsque le boîtier (13) est placé sur le châssis (2) au moyen du logement à engagement positif et est encliqueté sur le châssis (2) au moyen des moyens d'encliquetage (23).

12. Armoire électrique (1) selon l'une quelconque des revendications précédentes, dans laquelle le boîtier (13) présente une section de boîtier (25) avec un canal de vissage (24) continu, qui débouche, par ses ouvertures opposées, d'une part sur le côté extérieur du châssis (2) et, d'autre part, sur un plan de montage (M) du bord de profilé (8) pourvu de logements de fixation (12).

13. Armoire électrique (1) selon la revendication 12, dans laquelle le canal de vissage (24) s'étend à travers le volume (7) et une vis de fixation (26) est insérée depuis le côté extérieur dans le canal de vissage (24) et est vissée dans l'un des logements de fixation (12) de sorte qu'une tête de vis (27) de la vis de fixation (26) soit masquée par l'élément de paroi latérale (3).
